# EUROPEAN PATENT APPLICATION

(11) **EP 1 298 661 A2**
(43) Date of publication of application: **02.04.2003**
(21) Application number: 02292337.9
(22) Date of filing: 24.09.2002
(51) Int. Cl.: G11B 20/18

(54) **Defect detection of recordable storage media**

(30) Priority: 26.09.2001 US 963244
(71) Applicant: Thomson Licensing S.A., 92100 Boulogne-Billancourt (FR)
(72) Inventor: Schultz, Mark-Alan, Carmel, Indiana 46033 (US); Lin, Shu, Indianapolis, Indiana 46240 (US)
(74) Representative: Bonnans, Arnaud

(57) **Abstract**

The invention concerns a method (200) and system (100) for detecting defects in a recordable storage medium including the steps of: accessing (212) a segment of multimedia data that has been recorded onto a first portion of the recordable storage medium; selectively examining (214) the segment to determine whether the first portion contains a defect; and taking (222) corrective measures if a defect is detected, wherein the corrective measures are one or more of the corrective measures selected from the group including: generating a defect message; storing the address of the first portion of the recordable storage medium in a table; writing the segment of multimedia data onto a second portion of the recordable storage medium; or modifying the selectively examining step

## Description

### BACKGROUND OF THE INVENTION

### 1. Technical Field

The inventive arrangements relate generally to video recording systems and more particularly to video recording systems that record digitally encoded video sequences onto disc media such as recordable digital video discs, hard drives and magneto optical discs.

### 2. Description of Related Art

Many types of recordable storage media are susceptible to scratches or other breaches in their storage areas. Moreover, even a well-protected storage medium can become less effective after many uses. As an example, DVD discs can be scratched, which may lead to problems during playback of data that was recorded over an affected area. Additionally, the reflectively of a DVD disc may deteriorate after a substantial number of recordings.

Unfortunately, a user typically has no idea of the condition of the storage media onto which he is recording data. Thus, a user may record a lengthy program only to discover that a portion of the program was recorded onto a damaged or worn area of the medium. As the use of recordable storage media devices continues to increase, this recording problem will only worsen. Thus, what is needed is an effective means of detecting defects in recordable storage media.

### Summary of the Invention

The present invention concerns a method of detecting defects in a recordable optical storage medium. The method includes the steps of: accessing a segment of multimedia data that has been recorded onto a portion of the recordable storage medium; selectively examining the segment to determine whether the portion contains a defect; and taking corrective measures if a defect is detected, wherein the corrective measures are one or more of the corrective measures selected from the group comprising: generating a defect message; storing the address of the portion of the recordable storage medium in a table; writing the segment of multimedia data onto a new portion of the recordable storage medium; or modifying the selectively examining step. In one arrangement, the accessing step can include the step of recording the segment of multimedia data onto the portion of the recordable storage medium.

In one aspect of the method, the selectively examining step can include the steps of: selectively reading the segment; and selectively processing at least one error correction indicator in the segment to locate at least one error in the segment. These errors may be correctable in which the number of correctable errors has reached a predetermined threshold, or the errors may be uncorrectable. If the errors are uncorrectable, then the selectively reading and selectively processing steps can be repeated until the errors are corrected or repeated for a predetermined number of times, whichever is less. Additionally, if the errors are uncorrectable, then the selectively reading step can further include the step of skipping over at least a portion of the segment.

In another arrangement, the recordable optical storage medium can be a disc that spins during the selectively reading step, and the selectively reading step can further include the step of decreasing the speed of the disc prior to each of the selectively reading steps. Also, the selectively reading step can further include the step of maintaining the speed of the disc substantially constant during each of the selectively reading steps. In another aspect, the method can have the step of providing a front end section of a storage medium device in which the selectively examining step can be performed exclusively within the front end section. The present invention also concerns a method of detecting defects in a recordable storage medium, which includes the steps of: writing a segment of test data onto at least a portion of the recordable storage medium; selectively examining the segment of test data to determine whether the recordable storage medium contains a defect; and taking corrective measures if a defect is detected, wherein the corrective measures are one or more of the corrective measures selected from the group including: generating a defect message; storing the address of the portion of the recordable storage medium in a table; or writing the segment of test data onto a new portion of the recordable storage medium.

The present invention also concerns a system for detecting defects in a recordable optical storage medium. The system includes: a pickup assembly for accessing a segment of multimedia data that has been recorded onto a portion of the recordable storage medium; and a controller for: selectively examining the segment to determine whether the first portion contains a defect; and taking corrective measures if a defect is detected, wherein the corrective measures are one or more of the corrective measures selected from the group comprising: generating a defect message; storing the address of the portion of the recordable storage medium in a table; writing the segment of multimedia data onto a new portion of the recordable storage medium; or modifying said selectively examining step. The system also includes suitable software and circuitry to implement the methods as described above.

### Brief Description of the Drawings

FIG. 1 is a block diagram of a storage medium device that can detect defects in recordable optical storage media in accordance with the inventive arrangements herein.
FIG. 2 is a flow chart that illustrates an operation of detecting defects in recordable optical storage media in accordance with the inventive arrangements.

### Detailed Description of the Preferred Embodiments

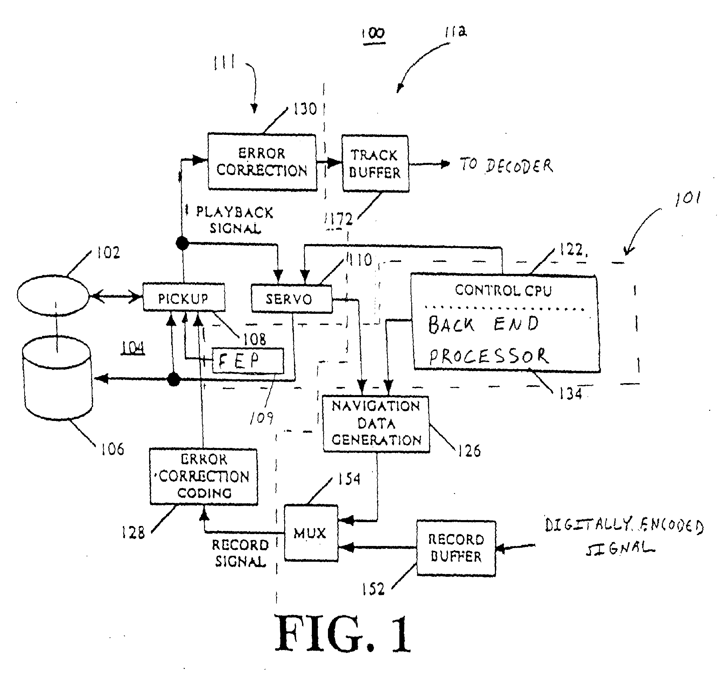

A system or storage medium device 100 for implementing the various advanced operating features in accordance with the inventive arrangements is shown in block diagram form in FIG. 1. The invention, however, is not limited to the particular device illustrated in FIG. 1, as the invention can be practiced with any other appropriate storage medium device capable of recording a digitally encoded signal onto a storage medium. In addition, the device 100 is not limited to reading data from or writing data to any particular type of storage medium, as any other appropriate storage medium capable of storing digitally encoded multimedia data can be used with the device 100. The following discussion, however, focuses on rewritable DVD technology to help explain the inventive arrangements herein.

The device 100 can include a controller 101 for locating defects in a recordable storage medium in accordance with the inventive arrangements. In one arrangement, the controller 101 can contain a back end processor or a control central processing unit (CPU) 122 and a front end processor 109. The device 100 can also include a front end section 111 and a back end section 112. The front end section 111 can include the following components: a motor 106 for spinning a storage medium such as a disc 102; a pickup assembly 108, which can be adapted to be moved over the disc 102 as the disc 102 spins; a servo 110 for controlling the motor 106 and the pickup assembly 108; error correction coding (ECC) circuits 128 and 130; and the front end processor 109. In one arrangement, the front end processor 109 can be used to process data once the pickup assembly 108 reads the data from the disc 102.

A laser on the pickup assembly 108 can burn spots onto a spiral track on the disc 102 and can illuminate spots already burned onto the track for recording and playing back video and/or audio program material. For purposes of understanding the invention, it is irrelevant whether the disc 102 is recordable on one or two sides, or in the event of a double-sided recording, whether the double-sided recording, or subsequent reading from the disc 102, takes place from the same side of the disc 102 or from both sides.

The back end section 112 can include the following components: the control CPU 122; a navigation data generation circuit 126; a track buffer 172; a record buffer 152 and a multiplexer 154 for multiplexing navigation data with the digitally encoded signal from the record buffer 152. In addition, control and data interfaces can also be provided for permitting the control CPU 122 to control (through the servo 110) the operation of the pickup assembly 108. Suitable software or firmware can be provided in memory for the conventional operations performed by the control CPU 122 and the front end processor 109. Further, program routines for detecting defects in recordable storage media in accordance with the inventive arrangements can be provided in memory for the front end processor 109; program routines for responding to any such defects in accordance with the inventive arrangements can be provided in memory for the control CPU 122 as well. In an alternative embodiment, those skilled in the art can appreciate that the front end processor 109 can be one or more hardware components suitable for reading and searching a data stream read from the disc 102.

The following is an example of how the device 100 can detect blemishes in the disc 102. The pickup assembly 108 can access a segment of multimedia data that has been recorded onto a portion of the disc 102. In one arrangement, the device 100 can be merely playing back multimedia data that has been recorded during a previous recording session. Alternatively, the device 100 can also be recording multimedia data, and the accessed segment of multimedia data can be a segment of data that has just been recorded onto the disc 102. Once accessed, the front end processor 109 can selectively examine the segment of multimedia data to determine whether the first portion of the disc 102 from which the segment was read contains a defect. Accordingly, the accessing and selectively examining steps can be performed exclusively within the front end section 111 thereby simplifying the overall process.

If a defect is detected in the portion of the disc 102, then a number of corrective measures can be taken. As an example, the control CPU 122 can generate a defect message and can store the address of the portion of the disc 102 that contains the defect to prevent recording over these sectors during subsequent recording sessions. In addition, the control CPU 122 can instruct the pickup assembly 108 to re-read the affected portion a number of times, instruct the servo 106 to decrease the speed of the disc 102 during the re-read step and/or instruct the servo 106 to maintain the speed of the disc 102 substantially constant during the re-read step. Moreover, if the device 100 is recording, then the control CPU 122 can instruct the pickup assembly 108 to re-record the affected portion of data onto a new portion of the disc 102 that does not contain any defects. These processes of defect detection and taking corrective action once a defect is detected will be explained in detail below.

### DEFECT DETECTION OF RECORDABLE STORAGE MEDIA

According to the inventive arrangements, a user can be notified of defects in a recordable storage media either during playback of previously recorded data or prior to or during an actual recording session. Specifically, a segment of multimedia data that has been recorded onto a first portion of a recordable storage medium can be accessed, and the data can then be selectively examined to determine whether the first portion contains a defect. The data that is examined can be data that has just been recorded during a current recording session or data that has been previously recorded and is being played back. If a defect is detected, then a number of corrective measures can be taken including: generating a defect message; storing the address of the first portion of the recordable storage medium in a table; writing the segment of data onto a second portion of the recordable storage medium; and modifying the selectively examining step.

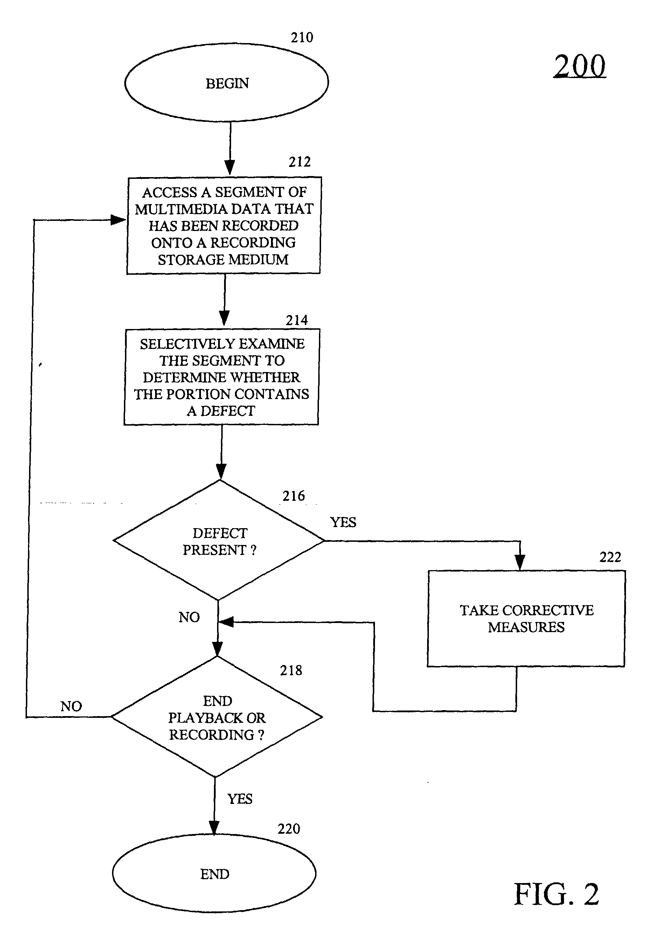

FIG. 2 illustrates a flowchart 200 that demonstrates one way in which defect detection can be performed on a storage medium. The process is initiated at step 210, and a segment of data that has been recorded onto a portion of a recordable storage medium can be accessed. In one arrangement, the segment of data can be multimedia data such as digitally encoded video, digitally encoded audio or a combination thereof. It should be noted, however, that the invention is not so limited, as the invention can be practiced with any other suitable form of data. In another arrangement, the accessed segment of multimedia data can be data that has been recorded during a current recording session or, alternatively, the data can be data that was recorded during a previous recording session and is merely being played back. If the data is being recorded during a current recording session, then the current recording session can be a continuous recording session, such as when a television program is being recorded. Also, the current recording session can be a pause-resume function. As is known in the art, a pause-resume function is a recording session in which a recordable storage medium device alternately reads and writes multimedia data following the termination of a pause command.

Once a segment of data has been accessed, all or a portion of that segment can then be examined to determine whether the portion of the recordable storage medium from which the segment was accessed contains a defect, as shown at step 214. In one arrangement, it can be determined whether the portion of the recordable storage medium has one or more defects by reading all or a portion of the segment of data and then selectively processing one or more error correction indicators in the segment to locate one or more errors in the segment. As an example, multimedia data read from a DVD disc can contain one or more error correction flags, which can be processed to locate errors in the data. For instance, these error correction flags can be inner parity errors, outer parity errors or a combination thereof located within the Reed-Solomon section. It should be noted, however, that these particular error correction indicators are merely examples, as any other suitable error correction indicator may be used to locate errors in the segment of data recorded onto the recordable storage medium.

If errors are detected in the segment of data, then this may indicate that the segment of data was recorded onto a portion of the recordable storage medium that contains an imperfection such as a scratch or a poor reflecting surface depending on the level and type of errors that are detected. For example, the detected errors may be correctable errors or uncorrectable errors. Correctable errors are errors that can be corrected as the data containing them is read from a storage medium thereby preventing any degradation of the data during playback. Conversely, uncorrectable errors are errors that cannot be corrected and can negatively affect the data during playback.

If the segment of data contains one or more uncorrectable errors, then there is a strong possibility that the portion of the recordable storage medium from which the segment was read contains a defect. Similarly, if the number of correctable errors reaches a predetermined threshold, then there is also a strong possibility that the portion of the storage medium contains a defect, even though these errors will not interfere with the picture quality during playback. As an example, if the segment of data is read from a DVD disc and the correctable errors correspond to physical damage, then the maximum correctable burst error length for many DVD players and/or recorders is typically approximately 2,800 bytes of data. Thus, a predetermined threshold for a DVD disc can preferably be set to a burst error length containing any number of bytes up to and including approximately 2,800 bytes. In another example, if the segment of data is read from a CD, then the predetermined threshold for a CD can preferably be set to a burst error length containing any number of bytes up to and including approximately 500 bytes of data, as the maximum correctable burst error length for a CD player and/or recorder is typically approximately 500 Bytes of data. It should be noted, however, that the foregoing are merely examples, as any other suitable predetermined threshold of correctable errors for these types of storage media as well as other forms of applicable storage media can be used for purposes of indicating that a recordable storage medium contains a defect.

If no defects are detected in the portion of the recordable storage medium at decision block 216, *i.e.,* no uncorrectable errors or the level of correctable errors in the segment of data has not reached the predetermined threshold, then flowchart 200 can continue on to decision block 218. If the playback and/or recording of data is stopped, then the flowchart can end at step 220. If the playback and/or recording of data is to continue, then the defect detection process can continue at step 212 where another segment of data can be accessed from another portion of the recordable storage medium.

If a defect is detected in the portion of the recordable storage medium at decision block 216, *i.e.,* an uncorrectable error has been found or the number of correctable errors has reached the predetermined threshold, then a number of corrective measures can be taken, as shown at step 222. In one arrangement, a defect message can be generated, which can inform the user that a defect exists on the recordable storage medium. In addition, the address of the portion of the recordable storage medium which contains the defect can be stored in a table for future reference. Storing these addresses can prevent further recording in defective areas of the recordable storage medium during subsequent recording sessions.

In another arrangement, the segment of data that was recorded onto the area of the medium containing the defect can be re-recorded onto another area of the medium if the storage medium device is currently recording data. In this arrangement, the data can be re-recorded onto any suitable defect-free area of the storage medium. Also, this re-recorded data can also be examined again in accordance with the discussion relating to step 214 to ensure that the new medium area receiving the data contains no defects. Although the re-recording step can be performed automatically, a defect message can also be generated to inform the user that the medium contains one or more defects, similar to the process discussed above. In addition, the address of the new defective portion of the recordable storage medium can be stored to prevent further recording in this area.

Continuing with the corrective measures step 222, if an uncorrectable error is detected in the segment of data, then the segment of data can be re-read, and the error correction indicators can be re-processed. That is, the reading and processing steps, as discussed in relation to step 214, can be repeated. This process may continue until the uncorrectable errors detected in the initial examining step can be corrected, or, alternatively, the reading and processing steps can be repeated for a predetermined number of times, whichever is less. Attempting to correct uncorrectable errors detected in the initial examining step can improve the playback of the affected segment of data. In addition, each of the corrective measures discussed above including generating a defect message, storing the bad addresses and re-writing the data in a new location can still be performed following the attempted correction of the initially uncorrectable errors.

In one arrangement, if the segment of data is stored on a disc that spins as the segment is read from the disc, then the speed of the disc can be slowed prior to each of the reading steps that are being repeated. Further, the speed of the disc can be maintained at a substantially constant rate during each of the reading steps that are being repeated. Slowing the disc prior to and/or maintaining the speed of the disc substantially constant during each reading step that is being repeated can improve the chances that the uncorrectable errors can be corrected during subsequent examining steps. In another embodiment, if the uncorrectable errors cannot be corrected, then the affected segment can be discarded and prevented from being displayed. As an example, a group of pictures (GOP) containing the uncorrectable error(s) can be discarded and thereby not displayed, as the quality of the display of such a GOP would be poor.

It should be noted that the invention is not limited to any specific algorithm for determining the amount of time spent on any of the above-discussed processes. Notably, the time spent writing, reading and/or processing data can be determined by a variety of factors such as the amount of available memory, the maximum reading and writing speeds, the seek time or the amount of time required to position the pickup assembly and the bit rate of the incoming data. For example, if the amount of available memory is increased and the seek time is decreased, then more time can be spent during the writing, reading and/or processing steps. Additionally, the large memory/fast seek time combination can permit the re-writing of data (see the discussion concerning step 222) to be carried out more smoothly. Further, faster reading and writing speeds and a lower incoming bit rate can increase the amount of time permitted for the writing, reading and/or processing steps.

In another arrangement, test data can be written onto at least a portion of the recordable storage medium prior to or during the step of writing the actual data to be recorded onto that portion of the medium. Specifically, a portion of the recordable storage medium can receive the test data. Once the test data is recorded onto the medium, the test data can then be selectively examined - similar to the examining process described above in step 214 - to determine whether the recording area contains one or more flaws.

In one arrangement, test data can be written onto the medium prior to the recording of the data intended to be written to the medium (or actual data) and then searched for errors. As an example, the test data can be written at a predetermined bit rate for a predetermined amount of time and then searched for errors. Continuing with this example, if the user wishes to record a one-half hour program, the test data can be recorded onto the disc for approximately one-half hour. In one arrangement, the test data can be written at the maximum recording rate. Writing at the maximum rate can ensure that a large enough area is searched for purposes of receiving the program, as it is unlikely that the bit rate for the actual data will remain at the maximum rate throughout the entire program. This test data can then be searched for errors to determine whether there are any defects in the portion of the medium that has received the test data. If a defect is detected, then a defect message can be generated and/or the address of the portion of the recordable storage medium which contains the defect can be stored in a table for future reference, as discussed in step 222 of flowchart 200. Thus, a user can be made aware of the suitability of a storage medium's recording capability prior to the actual recording. It should be noted, however, that the invention is not limited to the above example, as any other portion of the medium can be checked for errors including the entire medium, and the test data can be written at any other suitable bit rate.

In another arrangement, the test data can be written to the medium during the recording of the actual data. Specifically, before a segment of actual data is written to a portion of the medium, test data can be written to that portion of the medium and searched for errors. If the portion of the medium contains no defects, then the actual data can be recorded onto that portion of the medium and the process can continue.

If a defect is discovered, then one or more of the previously discussed corrective measures of step 222 of flowchart 200 can be performed. For example, a defect message can be generated and/or the address of the portion of the recordable storage medium which contains the defect can be stored in a table for future reference. Moreover, the test data can be recorded onto another area of the medium, and the test data can also be examined again to ensure that the new medium area receiving the test data contains no defects. Once a suitable area has been located, the actual data can be recorded there, and the process of alternately writing test and actual data can continue. It should be noted that this process of writing test data during the recording of test data can also be applicable during a pause-resume function.

In addition, similar to the process discussed in flowchart 200, the amount of time spent during the writing and examining of test data can be determined by the amount of available memory, the reading and writing speeds, the bit rate of the incoming actual data (if test data is to be written as actual data is being recorded) and the seek time. The test data can be any suitable form of data containing any suitable number of error correction indicators for purposes of locating defects in the recordable storage medium, so long as the test data is capable of being examined and recorded over with the actual data. Also, the addresses of the portions of the recordable storage medium containing defects can be stored in a table for future reference.

Although the present invention has been described in conjunction with the embodiments disclosed herein, it should be understood that the foregoing description is intended to illustrate and not limit the scope of the invention as defined by the claims.

## Claims

1. A method of detecting defects in a recordable storage medium, comprising the steps of:
accessing a segment (212) of multimedia data that has been recorded onto a portion of the recordable storage medium;
selectively examining (214) the segment to determine whether the portion contains a defect; and
taking corrective measures (222) if a defect is detected (216, YES), wherein the corrective measures are one or more of the corrective measures selected from the group comprising:
generating a defect message;
storing the address of the portion of the recordable storage medium in a table;
writing the segment of multimedia data onto a new portion of the recordable storage medium; or
modifying said selectively examining step.

2. The method according to claim 1, wherein said accessing step (212) comprises the step of recording the segment of multimedia data onto the portion of the recordable storage medium.

3. The method according to claim 1, wherein said selectively examining step (214) comprises the steps of:
selectively reading the segment; and
selectively processing at least one error correction indicator in the segment to locate at least one error in the segment.

4. The method according to claim 3, wherein the errors are correctable and the number of errors has reached a predetermined threshold.

5. The method according to claim 3, wherein the errors are uncorrectable.

6. The method according to claim 5, wherein said selectively reading and said selectively processing steps are repeated until the errors are corrected or repeated for a predetermined number of times, whichever is less.

7. The method according to claim 6, wherein the recordable optical storage medium is an optical disc (102) that spins during said selectively reading step and the selectively reading step further comprises the step of decreasing the speed of the disc prior to each said selectively reading step.

8. The method according to claim 7, wherein said selectively reading step further comprises the step of maintaining the speed of the disc (102) substantially constant during each said selectively reading step.

9. The method according to claim 5, wherein said selectively reading step further comprises the step of skipping over at least a portion of the segment.

10. The method according to claim 1, further comprising the step of providing a front end section (111) of a storage medium device, wherein said selectively examining step is performed exclusively within said front end section.

11. The method of claim 1, wherein the recordable storage medium is an optical disc (102).

12. A system for detecting defects in a recordable storage medium, comprising:
a pickup assembly (108) for accessing a segment of multimedia data that has been recorded onto a portion of the recordable storage medium (102); and
a controller (101) for:
selectively examining the segment to determine whether the portion contains a defect; and
taking corrective measures if a defect is detected, wherein the corrective measures are one or more of the corrective measures selected from the group comprising:
generating a defect message;
storing the address of the portion of the recordable storage medium in a table;
writing the segment of multimedia data onto a new portion of the recordable storage medium; or
modifying said selectively examining step.

13. The system according to claim 12, wherein the pickup assembly (108) records the segment of multimedia data onto the portion of the recordable storage medium.

14. The system according to claim 12, wherein said controller comprises:
a front end processor (109); and
a back end processor (134).

15. The system according to claim 14, wherein the front end processor is programmed to:
selectively reading the segment; and
selectively processing at least one error correction indicator in the segment to locate at least one error in the segment.

16. The system according to claim 15, wherein the errors are correctable and the number of errors has reached a predetermined threshold.

17. The system according to claim 15, wherein the errors are uncorrectable.

18. The system according to claim 17, wherein the front end processor (109) is further programmed to repeat the selectively reading and selectively processing steps until the errors are corrected or repeated for a predetermined number of times, whichever is less.

19. The system according to claim 15, wherein the recordable optical storage medium (102) is an optical disc that spins as the segment is selectively read and the back end processor (134) is programmed to decrease the speed of the disc prior to the segment being selectively read.

20. The system according to claim 19, wherein the back end processor (134) is further programmed to maintain the speed of the disc substantially constant as the segment is selectively read.

21. The system according to claim 17, wherein the front end processor (109) is further programmed to skip over at least a portion of the segment.

22. The system of claim 12, wherein the recordable storage medium is an optical disc (102).
